# EUROPEAN PATENT SPECIFICATION

(11) **EP 1 092 332 B1**
(45) Date of publication and mention of the grant of the patent: **27.09.2006**
(21) Application number: 99931189.7
(22) Date of filing: 25.06.1999
(51) Int. Cl.: H04Q 7/38

(54) **METHOD OF COMMUNICATING DATA USING RADIO SIGNALS AND RADIO COMMUNICATIONS APPARATUS**
VERFAHREN ZUR FUNKÜBERTRAGUNG VON DATEN UND FUNKÜBERTRAGUNGSGERÄT
PROCEDE SERVANT A COMMUNIQUER DES DONNEES AU MOYEN DE SIGNAUX RADIO ET APPAREIL DE RADIOCOMMUNICATIONS

(30) Priority: 30.06.1998 EP 98112145
(43) Date of publication of application: 18.04.2001
(73) Proprietor: SIEMENS AKTIENGESELLSCHAFT, 80333 München (DE)
(72) Inventor: BAHRENBURG, Stefan, D-81477 München (DE); BAIER, Paul, Walter, D-67661 Kaiserslautern (DE); RITTER, Gerhard, D-86943 Thaining (DE); MAYER, Jürgen, D-67105 Schifferstadt (DE); SCHLEE, Johannes, D-89134 Blaustein (DE); WEBER, Tobias, D-67731 Otterbach (DE); EMMER, Dieter, D-82319 Starnberg (DE)
(86) International application number: PCT/EP1999/004436
(87) International publication number: WO 2000/001184

(56) References cited:
- EP-A- 0 566 551
- US-A- 5 267 261
- US-A- 5 483 668
- BLANZ J ET AL: "PERFORMANCE OF A CELLULAR HYBRID C/TDMA MOBILE RADIO SYSTEM APPLYING JOINT DETECTION AND COHERENT RECEIVER ANTENNA DIVERSITY" IEEE JOURNAL ON SELECTED AREAS IN COMMUNICATIONS, vol. 12, no. 4, 1 May 1994 (1994-05-01), pages 568-579, XP000588834

## Description

The present invention relates to methods of communicating data using radio signals transmitted between a mobile station and a plurality of base stations. Furthermore, the present invention relates to radio communications apparatus which operate to communicate data via radio signals between a mobile station and a plurality of base stations.

Mobile radio communications systems are arranged to communicate data using radio signals transmitted between mobile stations and a plurality of base stations. The base stations of the mobile radio system are interconnected to form a mobile radio network. Radio communications resources, such as parts of the radio frequency spectrum are allocated to the base stations in such a way that, mobile stations may contemporaneously communicate data, using these allocated communications resources from anywhere within a radio coverage area provided by the mobile radio network.

Associated with each base station of the mobile radio system is a geographical area within which a mobile station can effect communication via radio signals with the base station, in preference to any other base station. This geographical area is known as a cell. Together the cells provided by the base stations of the mobile radio network create the radio coverage area to the effect that mobiles may roam within the coverage area, whilst enjoying the possibility of communicating radio signals via the allocated radio communications resources.

To optimise use of the communications resources, the same resources may be allocated to each of a set of base stations disposed throughout the network with the effect that these communications resources are reused, thereby facilitating an improvement in a number of communications channels which may be contemporaneously supported by mobile radio system. The communications resources may be such things as radio frequency carrier signals, time slots, or in the case of code division multiple access, spreading codes.

Mobile radio networks are provided with means whereby the mobile stations may change affiliation with the base stations of the network as the mobile stations moves throughout the radio coverage area, with the effect that radio signals are communicated with different base stations in accordance with which of the base stations at any one time provides the most efficient radio conditions for the communication of radio signals. Typically, this occurs whilst a mobile station is closer to one of the base stations than any of the other base stations, and that, therefore, the propagation conditions for radio signals between this base station and the mobile station provide the lowest path loss.

To provide uninterrupted communication of data as the mobile stations move within the mobile radio network, changing the affiliation with the base stations, the mobile radio system is provided with a means for communicating data using the different base stations in accordance with the change of affiliation of the mobile station from one base station to another. This change of affiliation is known as hand-over, or hand-off which is the term used hereinafter.

In the case of second generation mobile radio systems a mobile station communicating with a first base station is arranged to hand-off communication to a subsequent base station offering more efficient conditions for communicating radio signals by establishing a communications channel on a subsequent base station which in accordance with a frequency reuse pattern will be on a different carrier frequency and time slot, than the communications channel used for the first base station.

In third generation mobile radio systems, a likely candidate for the multiple access scheme is code division multiple access (CDMA). CDMA multiple access schemes are characterised in that data is combined with a spreading code or sequence in some way, and is thereafter arranged to modulate a radio frequency carrier signal to the effect that a receiver of the signal may detect and regenerate the data by combining the received signals with the spreading code which is known to the receiver. By using the spreading code, the radio signals may be transmitted contemporaneously to the effect that the capacity in terms of a number of communications channels which may be contemporaneously supported using the third generation system is substantially greater than that which is able to be achieved with a second generation mobile radio system.

Although CDMA-systems are arranged to communicate data using radio signals contemporaneously transmitted with other unwanted radio signals, the data may not be recovered in a case where too many unwanted radio signals are present at the receiver, or in other words that the power of the unwanted received signals is greater than a predetermined limit with respect to the power of the wanted radio signal. As such CDMA-systems are to that effect and extent interference limited.

A further characteristic of CDMA is that the transmitted radio signals have an increased bandwidth. As result, it is unlikely that third generation mobile radio systems will be arranged to reuse carrier frequencies, so that the same frequency will be used throughout the mobile radio network. However such systems will be arranged to reuse spreading codes.

As with known mobile radio systems, a mobile station must be arranged to change its affiliation between the base stations as the mobile station moves within the radio coverage area provided by the system. As such a technical problem exists in providing substantially uninterrupted data communications as the mobile station moves within a mobile radio network in which the base stations are provided with communications resources which include overlapping or common parts of the radio frequency spectrum.

Document US-A-5 483 668 solves that problem for a TDMA based network by assigning different radio resources or different time slots to the communication links between the mobile station and the base stations. Communication signals are sent contemporaneously on the links to provide soft hand-off. However, in a CDMA system, this solution suffers from the disadvantage that overall interference processed to reconstruct the original signal.

The object is addressed generally by detecting when the mobile station has entered a hand-off region, in which it might change affiliation to a different base station, and reserving communications resources at each base station to which the mobile may be re-affiliated, and communicating data using one of the reserved communications resources.

According to the present invention, there is provided a method of communicating data using radio signals transmitted between a mobile station and a plurality of base stations, the method comprising the steps of; transmitting radio signals using first communications recourses between the mobile station and a first of the base stations; detecting when the mobile station has entered a hand-off region, in which communication via the radio signals might be more efficiently effected through at least one different base station; allocating further communications resources associated with the at least one different base station; and communicating the data to one of the first or the at least one different base station, using one of the first or the further allocated communications resources, whilst the mobile station is in the soft hand-off region.

By arranging for the mobile radio system to detect when the mobile station has moved into an area in which radio communications might be more efficiently effected through at least one different base station, and allocating communications resources associated with each of the different base stations, and only communicating data using one of the first or the reserved radio communications resources, a hand-off of the communication of data between the first to the different base stations is effected without increasing an amount of interference experienced by other base stations and mobile stations of the system.

Thus, by only communicating data using one of the allocated communications resources from one of the first or the different base stations, the hand-off may be effected without increasing the interference to the other base stations and mobile stations.

The method may further include the steps of; detecting when communication can be more efficiently effected via either the first or the at least one different base station; transmitting radio signals using either the first or the allocated further communications resources associated with the first or the at least one different base station; and releasing the other of the first or the allocated further communications resources.

The at least one different base station may be a plurality of different base stations, and the step of allocating further communications resources comprises allocating to each of the different base stations the further communications resources.

The step of detecting when communication can be more efficiently effected via the first or the at least one different base station, comprises detecting which one of the plurality of different base stations or the first base station provides the more efficient radio communications channel for effecting communication of the data.

The term communications resources as used herein refers to and includes any physical resource such as time, frequency, spreading code or training sequence which may be used to communicate data using radio signals as part of a mobile radio system. A multiple access scheme used by the mobile radio system may be a time division-code division multiple access (TD-CDMA) scheme. The communications resources allocated to the mobile station may be a spreading code from a family of spreading codes or a training sequence from a family of training sequences.

The term hand-off region refers to a situation in which a mobile station finds more favourable radio propagation conditions with a base station with which it is not affiliated than the base station with which it is currently affiliated. This may occur, but may not only occur, when the mobile station is in the region of the boundary of the cell associated with the base station.

According to an aspect of the present invention there is provided a radio communications apparatus comprising, a mobile station and a plurality of base stations, each of the mobile stations and the plurality of base stations having a transmitter and a receiver coupled to a controller, the receiver in at least one of the mobile station and the plurality of base stations being arranged to detect radio signals transmitted by the transmitter of the other of the mobile station and the base stations, the controller in at least one of the mobile station and the base stations operating to detect when the mobile station has entered a hand-off region, in which communication via the radio signals might be more efficiently effected through at least one different base station rather than a first base station using first allocated communications resources, to allocate further communications resources for use in transmitting radio signals between the mobile station and the at least one different base station, and to communicate the data to one of the first or the at least one different base stations, using one of the first or the further allocated communications resources, whilst the mobile station is in the soft hand-off region, thereby providing substantially uninterrupted communication of the data as the mobile station moves with respect to the base stations, whilst minimising interference to other radio communications.

One embodiment of the present invention will now be described, by way of example only, with reference to the accompanying drawings wherein;
- FIGURE 1: is a schematic block diagram of a mobile radio communications system;
- FIGURE 2: is a schematic block diagram of a base station and a mobile station which appear in the mobile communications network shown in Figure 1;
- FIGURE 3: is a. representation of a reuse pattern associated with allocating codes from a code family between the base stations of the network;
- FIGURE 4: is a representation of three base stations illustrating a process in which a mobile station reaffiliates from one base station to another;
- FIGURE 5: is an illustration of the three base stations shown in Figure 4 illustrating a process of changing timing advance;
- FIGURE 6: is a diagram illustrating the three cells shown in Figures 4 and 5 with associated base stations and mobile stations in a process of being re-affiliated;
- FIGURE 7: is a table illustrating an allocation of communications resources associated with cell one shown in Figure 6;
- FIGURE 8: is a table illustrating an allocation of communications resources associated with cell another of Figure 6; and
- FIGURE 9: is a table illustrating an allocation of communications resources associated with a further cell of Figure 6.

An example embodiment of the present invention will be described with reference to a mobile radio telephone system operating in accordance with a time division-code division multiple access (TD-CDMA)-system. However, as will be clear from the following description of the example embodiment, the invention finds application in mobile radio communications systems with other multiple access schemes and modulation techniques.

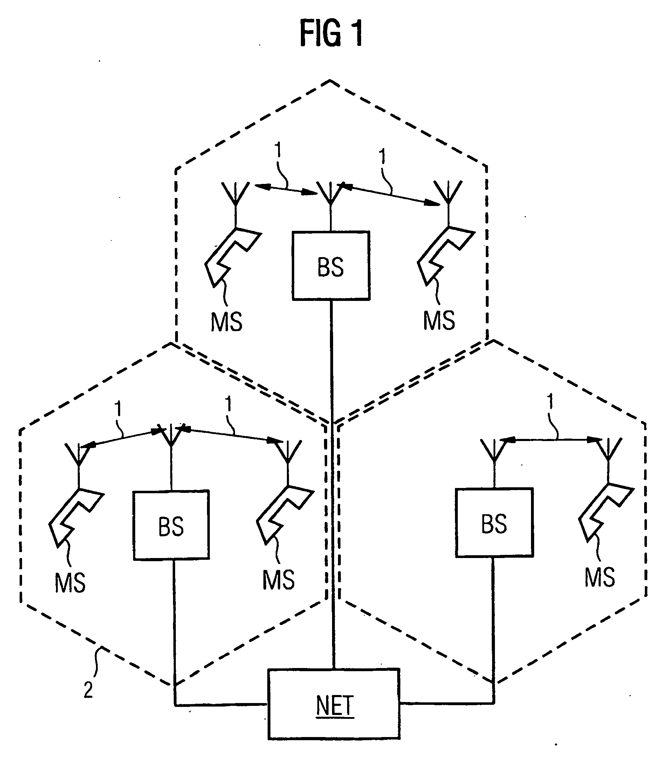

An illustration of part of a mobile radio system is shown in Figure 1. In Figure 1 three base stations BS are shown to be interconnected via a mobile network infra-structure, NET. Data is communicated between mobile stations MS and the base stations BS, by transmitting and receiving radio signals 1, between the base stations BS and the mobile stations MS operating within a radio coverage area effected by each of the base stations. The radio coverage area is shown illustrated as a broken line 2, and serves to indicate a boundary within which radio communications can be effected with the mobile stations MS. In the present illustrative embodiment the mobile stations MS communicate with the base stations BS in accordance with a TD-CDMA system. A more detailed explanation of how data is communicated using a time division CDMA system is provided in an article, entitled "Performance of a Cellular Hybrid C-TDMA Mobile Radio System Applying Joint Detection and Coherent Receiver Antenna Diversity" by G. Blanz, A. Klein, M. Naßhan and A. Steil published in the IEEE Journal on Selected Areas in Communications, Volume 12, no. 4, May 1994 at page 568, the content of which is incorporated herein by reference.
However for the present explanation it should be noted that communications using TD-CDMA systems is characterised in that radio frequency carrier signals via which communication of data is effected are divided into a plurality of time-slots. Each of these time-slots is assigned to a plurality of mobile stations which operate to communicate radio signals in the time-slot. In order to separate data communicated by the plurality of mobiles assigned to the same time-slot, each mobile is provided with a user specific code which is convolved with the data to be communicated. A receiver of the radio signals operates to separate data communicated by other mobile stations MS contemporaneously. As will be appreciated, a similar arrangement is effected for data communicated from the base stations to the mobile stations.

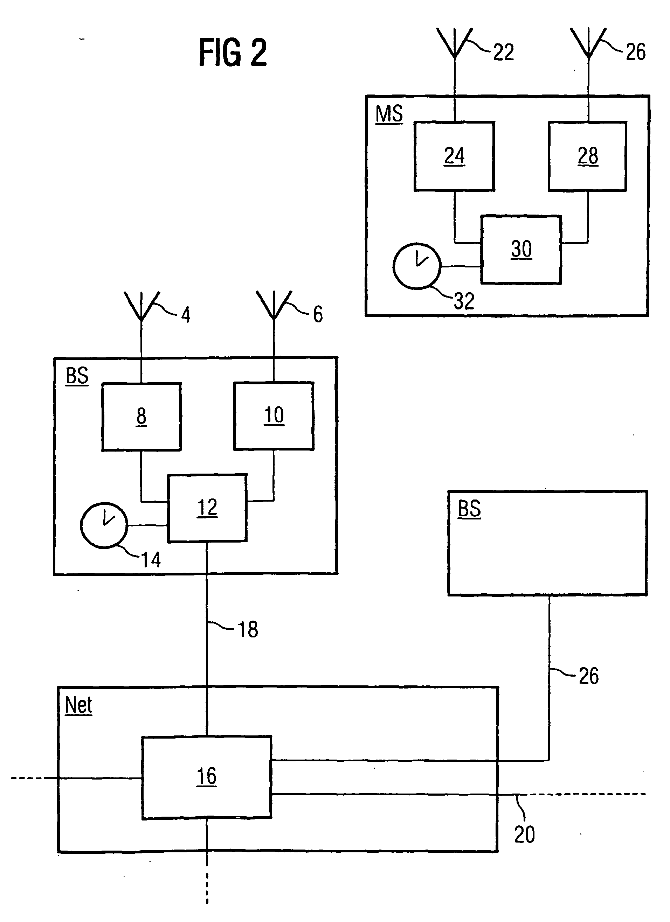

In order to provide a means whereby substantially uninterrupted communication of data may be effected, whilst the mobile stations move throughout the mobile radio network, the mobile stations and the base stations of the mobile radio network are provided with radio communications apparatus, which includes means to effect a process whereby the mobile stations change affiliation from one base station to a different base station, which is known in the following description as soft hand-off. An example of the communications apparatus is shown in Figure 2.

Figure 2 provides a schematic block diagram of a base station BS, and a mobile station MS, which are shown in Figure 1, and so parts common to both Figure 1 and 2 bear identical designations. In Figure 2, a base station BS is shown to include at least one transmit antenna 4 and at least one receive antenna 6. The transmit antenna is coupled to a transmitter 8, and the receive antenna 6 is coupled to a receiver 10. Coupled to both the transmitter and the receiver is a controller 12. Also connected to the controller 12 is a clock 14. The base station BS is connected to a further controller 16 via conductor 18. The further controller 16 forms part of the further communications network infra-structure, NET. Other base stations are coupled to the further controller 16, within the Network infrastructure NET, via further conductors 20, 26. The base station is therefore one example of the base stations illustrated in Figure 1. A mobile station MS is also shown in Figure 2, which has a transmit antenna 22, coupled to a transmitter 24. The mobile station MS further includes a receive antenna 26 coupled to a receiver 28. Both the transmitter 24 and the receiver 28 are coupled to a mobile station controller 30. Also coupled to the mobile station controller 30 is a clock 32.

The mobile radio system illustrated in Figures 1 and 2 is characterised in that with a multiple access scheme which operates in accordance with time division-code division multiple access (TD-CDMA), no frequency reuse is effected in that the cluster size of the cells in the frequency reuse pattern is one. However, because mobile stations will be allocated spreading codes from a family of spreading codes, reuse of communications resources will be effected by allocating the same code from the family of codes to different base stations within the network and furthermore different training sequences from a family of training sequences to the different base stations within the system. In accordance with a reuse of communications resources effected by the mobile radio system, base stations allocated the same spreading code or training sequence are arranged to be separated in distance to the effect that, mutual interference caused by contemporaneously transmitted radio signals using the same code or the same training sequences is reduced as far as possible as a result of path loss experienced by the signals. This serves to produce a code reuse to the effect that the same codes are allocated to different base stations to form a code reuse pattern. This increases utilisation of communications resources, thereby correspondingly increasing the capacity of the mobile radio network.

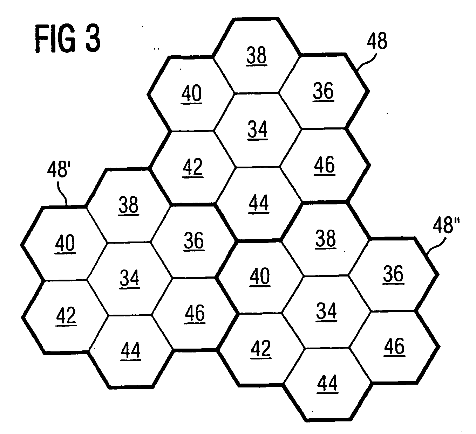

An example of a code reuse pattern is shown in Figure 3. In Figure 3 each of the cells 34, 36, 38, 40, 42, 44, 46, which forms a cluster of cells 48 is allocated different spreading codes from a CDMA code family. Furthermore these cells may also be allocated different training sequences from the family of different training sequences. However, thereafter other cells within the system are allocated the same CDMA spreading codes to the effect that the cluster pattern 48 is repeated in other cells throughout the mobile radio network. Thus as illustrated in Figure 3 the cluster 48' and 48" have been allocated the same codes in accordance with the same code reuse pattern. As an example, of a TD-CDMA system, the code family has eight CDMA codes with eight training sequences which are embodied within a mid-amble of the radio signals. Furthermore, the frame of the carrier frequency is divided into 8 time slots. As such there are sixty four (8 x 8 = 64) available communications resources per carrier frequency to be allocated for up-link, that is mobile to base station and down-link that is base station to mobile station communications:

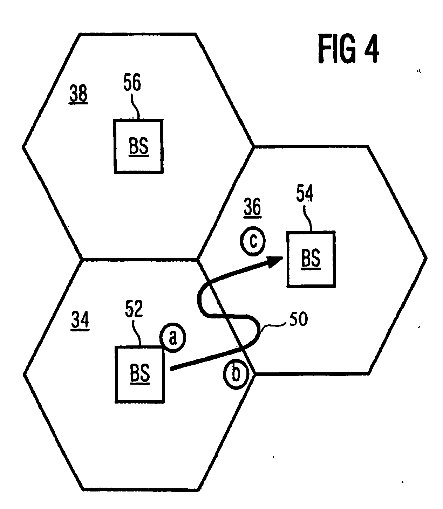

A process of re-assigning or changing affiliation of a mobile station between different base stations of the system in accordance with the present invention will now be described with reference to the mobile radio system as herein before described. As will be appreciated the communications resources which are allocated to the mobile stations to effect communication of data represent the time slots of the carrier frequency and also the spreading codes and training sequences used to effect communication using a TD-CDMA system. The process of re-affiliating a mobile station from one base station to the other is illustrated by the diagram shown in Figure 4, where parts also appearing in Figures 1, 2, and 3, bear identical numerical designations.

In Figure 4 three cells are shown designated 34, 36, 38. Also shown in Figure 4 are three points a, b and c which mark particular locations which are past by a mobile station as it moves from cell 34 to cell 36 along the path 50. The path 50 illustrates the location of the mobile station as it moves from the coverage area provided by cell 34, to the coverage area provided by cell 36. Thus the mobile station is arranged to re-affiliate from the base station 52, served by cell 34 to the base station 54, served by cell 36. The transmission of radio signals between the mobile station and the base station is arranged to be effected via the most efficient radio communications path, which may correspond to that path which has the lowest radio signal path loss. In this way, radio signals, transmitted by the mobile stations, arranged to arrive at the base station with substantial the same power, will be generated with a lower power thereby reducing interference to other mobile stations and base stations. Thus, the mobile station is arranged to use on the up-link communications resources in a cell which is associated with a base station which provides at any one time the most efficient radio channel for effecting data communications. To this end, the mobile station may be arranged to detect a pilot signal transmitted by each of the base stations 52, 54, 56, and to measure a characteristic of the pilot signal such as the signal strength, and to compare the measured characteristic with a predetermined threshold α. Thus as the mobile station moves from cell 34, along the path 50 at point a, the mobile station enjoys the lowest path loss for radio signals communicated with radio communications with base station 52 in cell 34. As such the radio communications resources used by the mobile station both on the up-link and the down-link will be a particular time slot and a particular spreading code allocated by base station 52. As the mobile station reaches point b, the base station or the mobile station may detect that the mobile station has moved into a hand-off region in which radio communications may be more efficiently effected through either base stations 54 associated with cell 36 or base station 56 associated with cell 38. This is determined by comparing the measured characteristic such as the signal strength of the pilot signals transmitted by each of the base stations with a threshold α. As the threshold is reached, in that the signals transmitted by the base station 52 is below the threshold, the mobile station detects that it is currently in the hand-off region. From the measured values of the pilot signals transmitted by base stations 54 and 56, the mobile station is able to determine whether it might be more appropriate to re-affiliate to either base station 54 and base station 56. In this state, communications resources are allocated to the mobile station from base station 54 and base station 56. This represents an allocation of a time slot and a spreading code, and a training sequence for use in communicating TD-CDMA signals in cell 34 or cell 36. As the mobile station reaches point c, the base station can determine that the communication of data via radio signals would be more efficiently effected through the communications resources associated with the base station 54. This can be detected by comparing the signal strength of the pilot signal with respect to a second threshold β and where this threshold is reached in that the pilot signal strength is greater than β, the mobile effects the soft hand-off in that communication is now effected with the communications resources allocated from base station 54 associated with cell 36.

Alternatively, the mobile station can determine whether the communication of data via radio signals would be more efficiently effective through base station 54 than base station 52 by comparing the signal strength of the pilot signals, or in other words, the path loss with respect to base stations 54 and 52 and where the path loss difference is greater than a threshold β, the mobile station should effect a soft hand-off in that communication is terminated through the communications resources allocated from base station 52 and continued via base station 54. As will be appreciated in accordance with this process, the mobile station may go back to cell 34 in effect leaving the soft hand-off region, which is detected by finding that the path loss to base station 52 is less than a threshold β than the path loss to base station 54.

As will be appreciated, determining which of the base stations provides the most efficient radio communications conditions for may be effected in a number of different ways. In the example embodiment of the invention, this is achieved by measuring a characteristic of the pilot signal transmitted by each base station. The measured characteristic might include for example, received signal strength, the path loss experienced by the pilot signal during transmission between the base station and the mobile station, the propagation delay experienced by the pilot signals, and the quality of data conveyed by the pilot signals.

Once the mobile station has left the soft hand-off region, the communications resources not used in any base station which has reserved communications resources for the mobile station will be de-allocated and which are therefore free to be allocated to another mobile station. As will be appreciated the mobile station may detect and determine the path loss associated with several base stations, that is base station 56 and 54, and determine after base station 54 and 56 have allocated communications resources to the mobile station, which of the communications resources associated with base stations 54, 56 it will continue communicating.

As an alternative to determining whether the mobile station has left the hand-off region, and affiliated with a different base station, any of the base station involved in the hand-off process may detect whether the mobile station has affiliated with a different base station, by measuring a time during which nc communications have been received. Where this time passes a predetermined threshold τ, then the resources reserved or allocated to the mobile station are released.

A receiver which operates to detect and recover data represented as TD-CDMA signals does so by estimating each of the contemporaneously transmitted signals within the time slot and cancelling these unwanted signals from the wanted detected signal. As such, an effect of allocating communications resources to a mobile is in effect to allocate a time slot, spreading code and training sequence to the mobile. The spreading code and training sequence are therefore incorporated into the TD-CDMA detection process at the base station whether data is actually communicated using these resources or not. The receiver in the base station is therefore able to detect whether or not data has actually been transmitted by the mobile station, and, therefore whether the mobile station has affiliated itself to this base station in the hand-off process.

As will be appreciated by those skilled in the art, the process of re-affiliating via the aforementioned soft hand-off process, may be controlled by either the mobile station MS, or the base station BS. The former is known as mobile initiated hand-off, whereas the later is known as base station initiated hand-off. In the former case, the characteristics of the pilot signals are measured in the mobile station, which determines whether it is in the hand-off region, and the base station to which it is to re-affiliate. In the later case, however the characteristics of the pilot signal are measured by the mobile station and then communicated to at least one of the base stations of the network, and which may be forwarded to a control function within the network infra-structure. This control function therefore determines which of the base stations the mobile station should re-affiliate, and in effect controls the hand-off process.

Communication of data on the Down-link, during the hand-off process, may be effected using any of the following three possibilities:
1. Every base station which has been identified as a candidate with which the mobile station may re-affiliate, and which has reserved communications resources, uses these resouces on the down-link to communicate the same data which is combined by the mobile station in some way. The mobile station may, for example, detect every version of the radio signals and combine the data or, only detect one version of the radio signals transmitted by one of the candidate base stations.
2. Only the base station, which is currently receiving data on the up-link from the mobile station is arranged to transmit radio signals on the down-link to the mobile station.
3.In a case where the mobile station is not transmitting data continuously on the up-link, but transmitting packets of data in a discontinuous fashion, the mobile station will not form a constant connection with any one of the base stations, but transmit packets of data to a base station with which it is currently affiliated. Therefore, the down-link communication will be performed from the base station, to which the mobile stations signals that it is in a state to receive data on the down-link.

As will be appreciated by those skills in the art, in order for the mobile station to transmit a burst of radio signals to the effect that the burst arrives at the base station within a particular time slot, the mobile station must advance a time of transmission of the burst in accordance with a propagation delay between the mobile station and the base station. One method for effecting this is to transmit random access radio signals to each possible different base station with which a mobile station might be re-affiliated in a predetermined time slot. The mobile station then receives a measurement cf the propagation time, that is, the time that the access radio signals took to travel between the mobile station and the base station. Correspondingly the mobile station then advances in time the transmission of the burst of radio signals so that the burst of radio signals arrives within a desired time slot at the base station.

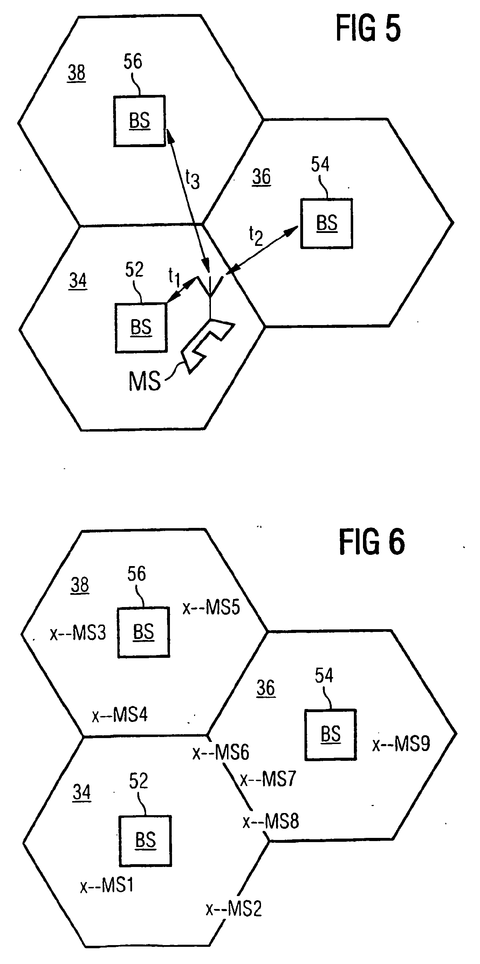

Alternatively if the base stations in the network are synchronised, transmission of access radio signals by the mobile station to each different base station to which the mobile station might be re-affiliated during hand-off is not required. This situation is illustrated in Figure 5 for the three cells 34, 36, 38, shown in Figure 4. As illustrated in Figure 2, each of the base stations in the mobile radio network is provided with a clock 14. Each clock is synchronised to a common source, either via the network infrastructure NET, or via a terrestrial radio signals transmitted by the base stations, or via some other means. With the mobile station coming from cell 34, the mobile station MS, knows that the timing advance value required for the base station 52 is t₁. This is because, the timing advance is twice the propagation delay between the mobile station MS and the base station 52, at the base station 52. This can be measured initially either using random access signals as already described, or by measuring the propagation delay of the pilot signals transmitted by the base station 52, with reference to the clock 32, embodied within the mobile station MS. In this case, however, the clock 32, must be pre-synchronised to the network clocks 14.

With knowledge of the propagation delay between the base station 52 and the mobile station MS, the mobile station can synchronise its clock 32, to the network time, represented by the clock 14, within the base station 52. As a result, the mobile station MS is effectively synchronised to the network. Thereafter the mobile station MS, can measure the propagation delay t₂, t₃, of, the pilot signal, transmitted by the base stations 54, 56. The mobile station can therefore re-calculate the necessary timing advance for the cell with which it is to hand-off. Alternatively the clock 32, may be used to compare the relative times of arrival of signals from either of the base stations. By comparing the relative times of arrival of signals from these base stations, the mobile station is able to assess the necessary timing advance.

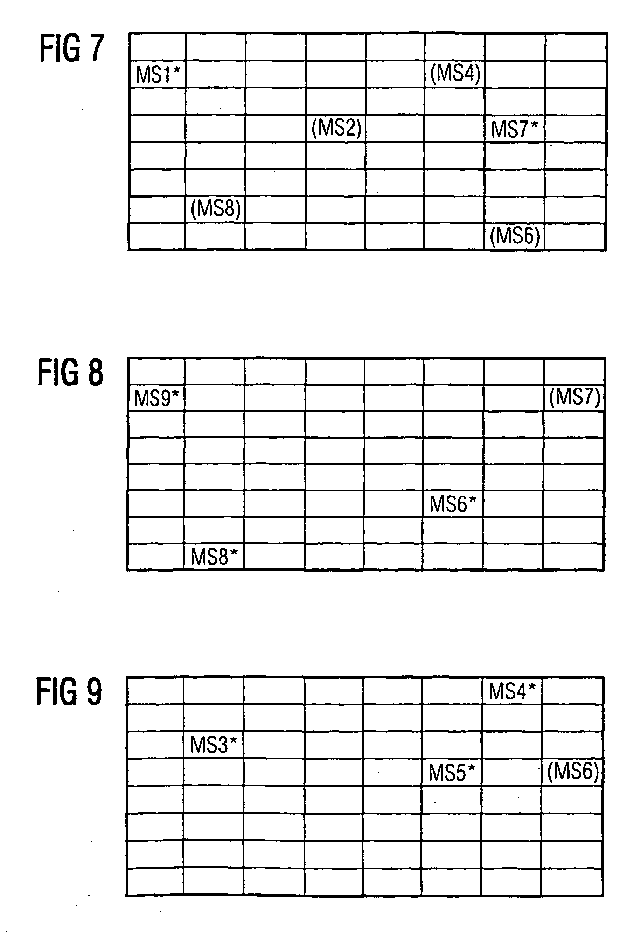

An example of an allocation of resources in each of the cells 34, 36, 38, is illustrated in Figure 6 in combination with Figures 7, 8 and 9 which illustrate the use of communications resources in the cells 34, 36, 38 respectively. In Figure 6 a point in the cells is shown where mobile stations MS1, MS2, MS3, MS4, MS5, MS6, MS7, MS8 and MS9 are disposed. For the cell 34, the communications resources available to the base station 52, is represented in tabular form in Figure 7, with each column representing a distinct spreading sequence and each row representing a time slot. Correspondingly, Figure 8 represents the communications resources available to base station 54, and Figure 9, represents the communications resources available to base station 56. Each of these entries of the table represents a single unit of allocated communications resource. Thus each column represents a spreading code whereas each row represents a corresponding time slot. The communications resources which have been reserved for use by mobile stations are shown in brackets, whereas the communications resources actually used by mobile station are designated by a star (*). Thus, although the mobile station 8 is allocated a communications resource in column 2, row 6 in cell 34, it is also allocated communications resource in cell 36, column 2, row 7 which is the resource which is currently being used. Although the mobile stations are allocated resources in more than one cell, communications resources in only one of the cells 34, 36, 38, are used by the mobile stations at any one time. Thus as will be appreciated from the tables shown in Figures 7, 8 and 9, mobile stations MS1, MS3, MS5 and MS9 are not at the point in time represented by these tables in a soft hand-off region, in that they are only communicating radio signals via one base station and do not have allocated resources in any other cell. The mobile stations MS7 and MS8 are in soft hand-off between base stations 54 and 52, although mobile station 7 is actually communicating through base station 52 whereas MS8 is actually communicating with base station 54. The mobile station MS4 is currently in soft hand-off between base station 52 and base station 56 and is actually communicating with a station 56. The mobile station MS6 is currently in soft hand-off between the three base stations 52, 54 and 56 and is actually communicating with base stations 54. The mobile station MS2 is currently in soft hand-off between the base station 52 and a further base station outside of the cell cluster illustrated in Figure 6.

As will be appreciated by those skilled in the art various modifications may be made to the illustrative embodiment without departing from the scope of the present invention. In particular, as will be appreciated various other multiple access schemes could be used for such a mobile radio system in which the soft hand-off process may be used. For example a code division multiple access using direct sequence spread spectrum may be used, as well as conventional time division multiple access and other multiple access schemes.

## Claims

1. A method of communicating data using radio signals transmitted between a mobile station (MS) and a plurality of base stations (BS), said method comprising the steps of
- transmitting radio signals using first communications recourses between said mobile station and a first of said base stations;
- detecting when said mobile station has entered a hand-off region, in which communication via said radio signals might be more efficiently effected through at least one different base station;
- allocating further communications resources associated with said at least one different base station;
**characterized by**
communicating said data to one of said first or said at least one different base station, using one of said first or said further allocated communications resources, whilst said mobile station is in said soft hand-off region, thereby providing uninterrupted communication of said data as said mobile station moves with respect to said base stations whilst minimising interference to other radio communications.

2. A method of communicating data as claimed in Claim 1, and further including the steps of;
- detecting when communication can be more efficiently effected via either said first or said at least one different base station;
- transmitting radio signals using either said first or said allocated further communications resources associated with said first or said at least one different base station; and
- releasing the other of said first or said allocated further communications resources.

3. A method of communicating data as claimed in Claim 1 or 2, wherein said at least one different base station is a plurality of different base stations, and the step of allocating further communications resources comprises allocating to each of said different base stations said further communications resources.

4. A method of communicating data as claimed in Claim 3, wherein the step of detecting when communication can be more efficiently effected via said first or said at least one different base station, comprises detecting which one of said plurality of different base stations or said first base station provides the more efficient radio communications channel for effecting communication of said data.

5. A method of communicating data as claimed in Claim 4, wherein the step of detecting when communication via said radio signals might be more efficiently effected through said first or said at least one different base station, comprises the steps of;
- for each of said first and said plurality of base stations detecting said radio signals transmitted by said mobile station; and
- identifying said at least one different base station consequent upon measured characteristics of said signals detected by said plurality of base stations.

6. A method of communicating data as claimed in Claim 5, and further including the step of; - communicating to said mobile station, which of said first or said further allocated communications resources said mobile should use to transmit said radio signals.

7. A method of communicating data as claimed in any of Claims 1 to 6, wherein the step of detecting when said mobile station has reached said hand-off region, comprises the steps of;
- detecting at said mobile station pilot radio signals transmitted by each of said first and said plurality of base stations; and
- identifying said at least one different base station consequent upon measured characteristics of said pilot signals detected by said mobile station.

8. A method of communicating data as claimed in Claim 5, 6 or 7, wherein the measured characteristic of said signals are at least one of the path loss associated with propagation between said mobile and said base stations, the received signal strength of said pilot radio signals and the quality of information communicated by said pilot radio signal.

9. A method of communicating data as claimed in any preceding Claim, wherein the step of detecting when the mobile station (MS) has moved into the hand-off region, comprises the steps of;
- comparing said measured characteristic with a pre-determined reference (α); and
- determining that said mobile station has entered said hand-off region, in dependence upon whether said measured characteristic is below said pre-determined reference (α).

10. A method of communicating data as claimed in Claim 9, wherein, the step of detecting when communication can be more efficiently effected via said at least one different base station, comprises the steps of;
- comparing the measured characteristics of said pilot signal transmitted between said mobile station and said first base station, and said mobile station and said at least one different base station; and
- selecting said different base station consequent upon said comparison to the effect that communication of said radio signals is substantially optimised.

11. A method of communicating data as claimed in Claim 9, wherein, the step of detecting when communication can be more efficiently effected via said at least one different base station, comprises the step of;
- comparing the measured characteristic of pilot signals transmitted between said mobile station and said at least one different base station; and
- selecting said different base station consequent upon whether said measured characteristic is less than a pre-determined threshold (β).

12. A method of communicating data as claimed in any of Claims 2 to 11, and further including the step of;
- releasing said allocated resources for each of the other base stations which are not selected.

13. A method of communicating data as claimed in any preceding Claim, wherein at least one of said first and said further communications resources are shared between a plurality of said base stations.

14. A method of communicating data as claimed in any preceding Claim, wherein said communications resources are carrier frequencies, time slots or spreading codes.

15. A method of communicating data as claimed in any preceding Claim, wherein said radio signals are generated in accordance with Code Division Multiple Access (CDMA), and said first and further communications resources are spreading codes from a family of spreading codes shared between said base stations.

16. A method of communicating data as claimed in Claim 15, wherein said radio signals are transmitted in one of a plurality of time slots, said CDMA radio signals being time division-CDMA signals.

17. A method of communicating data as claimed in Claim 16, and further including the step of;
- transmitting said radio signals from said mobile station, to said identified base station using said allocated further communications resources associated with said identified base station, and
- detecting at said identified base station that said radio signals are being transmitted using said allocated communications resources, in accordance with a TD-CDMA joint detection process.

18. A method of communicating data as claimed in any preceding claim, and further including the steps of
- transmitting radio signals from a plurality of said first and said plurality of different base stations to said mobile station; and
- combining said radio signals to effect communication of the data which said radio signals represent.

19. A method of communicating data as claimed in any preceding claim, and further including the step of
- transmitting radio signals from said identified different base station using said allocated communications resources, in correspondence with the transmission of radio signals from said mobile station to said identified base station using said allocated further communications resources.

20. A method of communicating data as claimed in any preceding claim, and further including the step of;
- at a predetermined time, sending access radio signals to said identified different base station;
- determining a time taken for said access radio signals to reach said identified base station; and
- adjusting a time of transmission of said radio signals consequent upon said time taken, whereby said radio signals arrive at said base station substantially within one of said allocated time slots.

21. A method of communicating data as claimed in any preceding claim, wherein said plurality of base stations are substantially synchronised, and further including the step of;
- measuring a time taken for the pilot signal transmitted by each of said plurality of base stations to reach said mobile station;
- comparing an adjusted time of transmission of said radio signals with said first base station, with said measured time taken; and
- adapting said adjusted transmission time consequent upon said measured time taken for said identified different base stations.

22. A radio communications apparatus comprising
- a mobile station (MS) and a plurality of base stations (BS), each of said mobile stations and said plurality of base stations having a transmitter and a receiver coupled to a controller, said receiver in at least one of said mobile station and said plurality of base stations being arranged to detect radio signals transmitted by the transmitter of the other of said mobile station and said base stations, said controller in at least one of said mobile station and said base stations with means to
- detect when said mobile station has entered a hand-off region, in which communication via said radio signals might be more efficiently effected through at least one different base station rather than a first base station using first allocated communications resources,
- allocate further communications resources for use in transmitting radio signals between said mobile station and said at least one different base station
**characterized by**
- means to communicate said data to one of said first or said at least one different base stations, using one of said first or said further allocated communications resources, whilst said mobile station is in said soft hand-off region, thereby providing substantially uninterrupted communication of said data as said mobile station moves with respect to said base stations, whilst minimising interference to other radio communications.

## Patentansprüche

1. Verfahren zur Übertragung von Daten mithilfe von Funksignalen, die zwischen einer Mobilstation (MS) und einer Mehrzahl von Basisstationen (BS) gesendet werden, wobei das besagte Verfahren folgende Schritte umfasst:
- Senden von Funksignalen über erste Funkübertragungsressourcen zwischen der besagten Mobilstation und einer ersten der besagten Basisstationen;
- Erkennen, wenn die besagte Mobilstation in einen Verbindungsübergabebereich eingetreten ist, in dem die Übertragung mittels der besagten Funksignale effizienter über mindestens eine andere Basisstation abgewickelt werden kann;
- Zuweisen weiterer Funkübertragungsressourcen, die der besagten mindestens einen anderen Basisstation zugeordnet sind;
**dadurch gekennzeichnet,**
**dass** die besagten Daten an entweder die besagte erste oder die besagte mindestens eine andere Basisstation übertragen werden, wozu eine der besagten ersten oder besagten zusätzlich zugewiesenen Funkübertragungsressourcen genutzt wird, während sich die besagte Mobilstation in dem besagten Bereich für eine nahtlose Verbindungsübergabe befindet, wodurch eine unterbrechungsfreie Übertragung der besagten Daten bereitgestellt wird, wenn sich die besagte Mobilstation in Bezug auf die besagten Basisstationen bewegt, und gleichzeitig Störungen anderer Funkübertragungen auf ein Minimum reduziert werden.

2. Verfahren zur Übertragung von Daten gemäß Anspruch 1, welches ferner folgende Schritte beinhaltet:
- Erkennen, wann die Übertragung effizienter über entweder die besagte erste oder die besagte mindestens eine andere Basisstation abgewickelt werden kann;
- Übertragen der Funksignale über entweder die besagten ersten oder die besagten zusätzlich zugewiesenen Funkübertragungsressourcen, die der besagten ersten oder der besagten mindestens einen anderen Basisstation zugewiesen sind; und
- Freigeben der übrigen der besagten ersten bzw. der besagten zusätzlich zugewiesenen Funkübertragungsressourcen.

3. Verfahren zur Übertragung von Daten gemäß Anspruch 1 oder 2, wobei die besagte mindestens eine andere Basisstation eine Mehrzahl von anderen Basisstationen ist und der Schritt des Zuweisens zusätzlicher Funkübertragungsressourcen das Zuweisen der besagten zusätzlichen Funkübertragungsressourcen zu jeder der besagten anderen Basisstationen umfasst.

4. Verfahren zur Übertragung von Daten gemäß Anspruch 3, wobei der Schritt des Erkennens, wann die Übertragung effizienter über die besagte erste oder die besagte mindestens eine andere Basisstation abgewickelt werden kann, das Erkennen beinhaltet, ob eine der besagten Mehrzahl von anderen Basisstationen oder die besagte erste Basisstation den effizienteren Funkübertragungskanal für die Abwicklung der Übertragung der besagten Daten bereitstellt.

5. Verfahren zur Übertragung von Daten gemäß Anspruch 4, wobei der Schritt des Erkennens, wann die Übertragung mittels der besagten Funksignale effizienter über die besagte erste oder die besagte mindestens eine andere Basisstation abgewickelt werden kann, folgende Schritte umfasst:
- für jede der besagten ersten und der besagten Mehrzahl von Basisstation(en) Erkennen der besagten Funksignale, die von der besagten Mobilstation gesendet werden; und
- Identifizieren der besagten mindestens einen anderen Basisstation infolge gemessener Merkmale der besagten Funksignale, welche von der besagten Mehrzahl von Basisstationen erkannt werden.

6. Verfahren zur Übertragung von Daten gemäß Anspruch 5, welches ferner folgenden Schritt umfasst:
- Informieren der besagten Mobilstation darüber, welche der besagten ersten oder besagten zusätzlich zugewiesenen Funkübertragungsressourcen die besagte Mobilstation nutzen soll, um die besagten Funksignale zu übertragen.

7. Verfahren zur Übertragung von Daten gemäß einem der Ansprüche 1 bis 6, wobei der Schritt des Erkennens, wann die besagte Mobilstation in den besagten Verbindungsübergabebereich eintritt, folgende Schritte umfasst:
- Erkennen von Pilotsignalen an der besagten Mobilstation, welche von jeder der besagten ersten und besagten Mehrzahl von Basisstation(en) abgestrahlt werden; und
- Identifizieren der besagten mindestens einen anderen Basisstation infolge gemessener Merkmale der besagten Pilotsignale, welche von der besagten Mobilstation erkannt werden;

8. Verfahren zur Übertragung von Daten gemäß Anspruch 5, 6 oder 7, wobei das gemessene Merkmal der besagten Signale mindestens eines der folgenden ist: die Funkfelddämpfung, die mit der Signalausbreitung zwischen der besagten Mobilstation und den besagten Basisstationen einhergeht, die Empfangssignalstärke der besagten Pilotsignale und die Qualität der von dem besagten Pilotsignal übermittelten Daten.

9. Verfahren zur Übertragung von Daten gemäß einem der vorstehenden Ansprüche, wobei der Schritt des Erkennens, wann die Mobilstation (MS) in den Verbindungsübergabebereich eintritt, folgende Schritte umfasst:
- Vergleichen des besagten gemessenen Merkmals mit einem vorab definierten Bezugswert (α); und
- Feststellen, dass die besagte Mobilstation in den besagten Verbindungsübergabebereich eingetreten ist, abhängig davon, ob das besagte gemessene Merkmal unterhalb des besagten vorab definierten Bezugswertes (α) liegt.

10. Verfahren zur Übertragung von Daten gemäß Anspruch 9, wobei der Schritt des Erkennens, wann die Übertragung effizienter über die besagte mindestens eine andere Basisstation abgewickelt werden kann, folgende Schritte umfasst:
- Vergleichen des gemessenen Merkmals des besagten Pilotsignals, das zwischen der besagten Mobilstation und der besagten ersten Basisstation sowie zwischen der besagten Mobilstation und der besagten mindestens einen anderen Basisstation gesendet wird; und
- Auswählen der besagten anderen Basisstation infolge des besagten Vergleichs, mit der Wirkung, dass die Übertragung der besagten Funksignale im Wesentlichen optimiert wird.

11. Verfahren zur Übertragung von Daten gemäß Anspruch 9, wobei der Schritt des Erkennens, wann die Übertragung effizienter über die besagte mindestens eine andere Basisstation abgewickelt werden kann, folgende Schritte umfasst:
- Vergleichen des gemessenen Merkmals der besagten Pilotsignale, die zwischen der besagten Mobilstation und der besagten mindestens einen anderen Basisstation gesendet werden; und
- Auswählen der besagten anderen Basisstation abhängig davon, ob das besagte gemessene Merkmal unterhalb eines vorab definierten Schwellenwertes (β) liegt.

12. Verfahren zur Übertragung von Daten gemäß einem der vorstehenden Ansprüche 2 bis 11, welches ferner folgenden Schritt umfasst:
- Freigeben der besagten zugewiesenen Funkübertragungsressourcen für jede der anderen Basisstationen, die nicht ausgewählt wird.

13. Verfahren zur Übertragung von Daten gemäß einem der vorstehenden Ansprüche, wobei mindestens eine der besagten ersten und besagten zusätzlichen Funkübertragungsressourcen von einer Mehrzahl der besagten Basisstationen gemeinsam genutzt werden.

14. Verfahren zur Übertragung von Daten gemäß einem der vorstehenden Ansprüche, wobei die besagten Funkübertragungsressourcen Trägerfrequenzen, Zeitschlitze oder Spreizcodes sind.

15. Verfahren zur Übertragung von Daten gemäß einem der vorstehenden Ansprüche, wobei die besagten Funksignale gemäß einem Codemultiplex-Zugriffsschema (CDMA, Code *Division Multiple Access*) erzeugt werden und die besagten ersten und zusätzlich zugewiesenen Funkübertragungsressourcen Spreizcodes aus einer Familie von Spreizcodes sind, die von den besagten Basisstationen gemeinsam genutzt wird.

16. Verfahren zur Übertragung von Daten gemäß Anspruch 15, wobei die besagten Funksignale in einem aus einer Mehrzahl von Zeitschlitzen übertragen werden, wobei die besagten CDMA-Funksignale Zeitmultiplex-CDMA (TD-CDMA) -Signale sind.

17. Verfahren zur Übertragung von Daten gemäß Anspruch 16, welches ferner folgenden Schritt umfasst:
- Senden der besagten Funksignale von der besagten Mobilstation an die besagte identifizierte Basisstation mithilfe der besagten zusätzlich zugewiesenen Funkübertragungsressourcen, die der besagten identifizierten Basisstation zugeordnet sind, und
- Erkennen an der besagten identifizierten Basisstation, dass die besagten Funksignale mithilfe von besagten zusätzlich zugewiesenen Funkübertragungsressourcen gesendet werden, entsprechend einem gemeinsamen TD-CDMA-Erkennungsprozess.

18. Verfahren zur Übertragung von Daten gemäß einem der vorstehenden Ansprüche, welches ferner folgende Schritte umfasst:
- Abstrahlen von Funksignalen von einer Mehrzahl der besagten ersten und besagten Mehrzahl von anderen Basisstationen an die besagte Mobilstation; und
- Kombinieren der besagten Funksignale, um die Übertragung der Daten, die durch die Funksignale repräsentiert werden, durchzuführen.

19. Verfahren zur Übertragung von Daten gemäß einem der vorstehenden Ansprüche, welches ferner folgenden Schritt umfasst:
- Abstrahlen von Funksignalen von der besagten identifizierten anderen Basisstation über die besagten zugewiesenen Funkübertragungsressourcen in Übereinstimmung mit der Übertragung von Funksignalen von der besagten Mobilstation an die besagte identifizierte Basisstation über die besagten zusätzlich zugewiesenen Funkübertragungsressourcen.

20. Verfahren zur Übertragung von Daten gemäß einem der vorstehenden Ansprüche, welches ferner folgende Schritte umfasst:
- zu einem vorab definierten Zeitpunkt Senden von Direktzugriffs-Funksignalen an die besagte identifizierte andere Basisstation;
- Ermitteln der Zeit, die die besagten Direktzugriffs-Funksignale benötigen, um die besagte identifizierte Basisstation zu erreichen; und
- Anpassen eines Zeitpunktes für das Senden der besagten Funksignale entsprechend der besagten benötigten Zeit, wodurch die besagten Funksignale an der besagten Basisstation im Wesentlichen innerhalb eines der besagten zugewiesenen Zeitschlitze ankommen.

21. Verfahren zur Übertragung von Daten gemäß einem der vorstehenden Ansprüche, wobei die besagte Mehrzahl von Basisstationen im Wesentlichen synchronisiert sind, und welches ferner folgende Schritte umfasst:
- Messen der Zeit, die das von jeder der besagten Mehrzahl von Basisstationen gesendete Pilotsignal benötigt, um die besagte Mobilstation zu erreichen;
- Vergleichen eines angepassten Zeitpunkts für das Senden der besagten Funksignale an die besagte erste Basisstation mit der besagten gemessenen benötigten Zeit; und
- Anpassen des besagten angepassten Zeitpunkts für das Senden infolge der besagten gemessenen benötigten Zeit für die besagten identifizierten anderen Basisstationen.

22. Funkübertragungsgerät, welches Folgendes umfasst:
- eine Mobilstation (MS) und eine Mehrzahl von Basisstationen (BS), wobei jede der besagten Mobilstationen und der besagten Mehrzahl von Basisstationen einen Sender und einen Empfänger aufweist, die mit einer Steuerung gekoppelt sind, wobei der besagte Empfänger in mindestens einer der besagten Mobilstationen und der besagten Mehrzahl von Basisstationen dafür ausgelegt ist, Funksignale zu erkennen, die von dem Sender der jeweils anderen besagten Mobilstation bzw. besagten Basisstationen abgestrahlt werden, wobei die besagte Steuerung in mindestens einer der besagten Mobilstationen und besagten Basisstationen Mittel umfasst zum:
- Erkennen, wenn die besagte Mobilstation in einen Verbindungsübergabebereich eingetreten ist, in dem die Übertragung mittels der besagten Funksignale unter Umständen effizienter über mindestens eine andere Basisstation als die erste Basisstation abgewickelt werden kann, wozu erste zugewiesene Funkübertragungsressourcen genutzt werden;
- Zuweisen zusätzlicher Funkübertragungsressourcen, die für die Übertragung von Funksignalen zwischen der besagten Mobilstation und der besagten mindestens einen anderen Basisstation genutzt werden können,
**gekennzeichnet durch**
- Mittel zum Übertragen der besagten Daten an entweder die besagte erste oder die besagte mindestens eine andere Basisstation, wozu eine der besagten ersten oder der besagten zusätzlich zugewiesenen Funkübertragungsressourcen genutzt wird, solange sich die Mobilstation in dem besagten Bereich für die nahtlose Verbindungsübergabe befindet, wodurch eine im Wesentlichen unterbrechungsfreie Übertragung der besagten Daten gewährleistet wird, wenn sich die besagte Mobilstation in Bezug auf die besagten Basisstationen bewegt, wobei gleichzeitig Störungen anderer Funkübertragungen minimiert werden.

## Revendications

1. Procédé pour communiquer des données en utilisant des signaux radio émis entre un poste mobile (MS) et une pluralité de postes de base (BS), ledit procédé comportant les étapes qui consistent à :
émettre des signaux radio en utilisant des premières ressources de communication entre ledit poste mobile et un premier desdits postes de base,
détecter lorsque ledit poste mobile est entré dans une zone de transfert dans laquelle la communication par lesdits signaux radio pourrait être réalisée de façon plus efficace par l'intermédiaire d'au moins un autre poste de base,
attribuer d'autres ressources de communication associées audit autre au moins un poste de base,
**caractérisé en ce que**
la communication desdites données vers l'un parmi ledit premier et ledit au moins un autre poste de base en utilisant l'une parmi lesdites premières ou lesdites autres ressources de communication attribuées pendant que ledit poste de base se trouve dans ladite zone de transfert sans interruption de la communication, pour ainsi assurer une communication ininterrompue desdites données lorsque ledit poste mobile se déplace par rapport auxdits postes de base tout en minimisant les interférences avec d'autres communications radio.

2. Procédé de communication de données selon la revendication 1, qui comprend en outre les étapes qui consistent à :
détecter lorsque la communication peut être réalisée de façon plus efficace par ledit premier ou ledit au moins un autre poste de base,
émettre des signaux radio en utilisant soit lesdites premières ressources de communication ou lesdites autres ressources de communication attribuées et associées audit premier ou audit ou auxdits au moins un autre poste de base et
libérer les autres desdites première ou desdites autres ressources de communication attribuées.

3. Procédé de communication de données selon les revendications 1 ou 2, dans lequel ledit au moins un autre poste de base est une pluralité d'autres postes de base et dans lequel l'étape d'attribution d'autres ressources de communication comprend l'attribution desdites autres ressources de communication à chacun desdits autres postes de base.

4. Procédé de communication de données selon la revendication 3, dans lequel l'état de détection du moment où la communication peut être réalisée de manière plus efficace par ledit premier ou par ledit au moins un autre poste de base comprend la détection de celui parmi ladite pluralité d'autres postes de base ou ledit premier poste de base qui assure le canal de communication radio le plus efficace pour réaliser la communication desdites données.

5. Procédé dé communication de données selon la revendication 4, dans lequel l'étape de détection de l'instant auquel la communication par lesdits signaux radio pourrait être réalisée de façon plus efficace par ledit premier poste de base ou ledit au moins un autre poste de base comprend les étapes qui consistent à :
pour chacun parmi ledit premier et ladite pluralité de postes de base, la détection desdits signaux radio émis par ledit poste de base et
l'identification dudit au moins un autre poste de base qui suit la mesure de la caractéristique desdits signaux détectés par ladite pluralité de postes de base.

6. Procédé de communication de données selon la revendication 5 qui comprend en outre l'étape qui consiste à :
communiquer audit poste mobile lesquelles parmi lesdites premières ressources de communication ou lesdites autres ressources de communication attribuées ledit mobile doit utiliser pour émettre lesdits signaux radio.

7. Procédé de communication de données selon l'une quelconque des revendications 1 à 6, dans lequel l'étape de détection de l'instant auquel ledit poste de base a atteint ladite région de transfert comprend les étapes qui consistent à :
détecter sur ledit poste mobile les signaux radio pilote émis par chacun parmi ledit premier et ladite pluralité de postes de base et
identifier ledit au moins un autre poste de base après mesure des caractéristiques desdits signaux pilote détectés par ledit poste mobile.

8. Procédé de communication de données selon les revendications 5, 6 ou 7, dans lequel la caractéristique mesurée sur lesdits signaux sont la perte d'acheminement associée à la propagation entre ledit poste mobile et ledit poste de base, la force des signaux radio pilotes reçus et/ou la qualité des informations à communiquer par ledit signal radio pilote.

9. Procédé de communication de données selon l'une quelconque des revendications précédentes, dans lequel l'étape de détection de l'instant auquel le poste mobile (MS) est entré dans une région de transfert comprend les étapes qui consistent à :
comparer ladite caractéristique mesurée à une référence (α) prédéterminée et
déterminer si le poste mobile est entré dans ladite région de transfert en fonction de ce que ladite caractéristique mesurée est inférieure à ladite référence (α) prédéterminée.

10. Procédé de communication de données selon la revendication 9, dans lequel l'étape de détection de l'instant auquel la communication peut être réalisée de façon plus efficace par l'intermédiaire dudit au moins un autre poste de base comprend les étapes qui consistent à :
comparer les caractéristiques mesurées sur ledit signal pilote émis entre ledit poste mobile et ledit premier poste de base, ainsi qu'entre ledit poste mobile et ledit au moins un autre poste de base et
sélectionner ledit autre poste de base selon ladite comparaison de manière à optimiser essentiellement la communication desdits signaux radio.

11. Procédé de communication de données selon la revendication 9, dans lequel l'étape de détection de l'instant auquel la communication peut être réalisée de façon plus efficace par ledit au moins un autre poste de base comprend les étapes qui consistent à :
comparer la caractéristique mesurée sur les signaux pilote émis entre ledit poste mobile et ledit au moins un autre poste de base et
sélectionner ledit autre poste de base selon que la caractéristique mesurée est inférieure à un seuil prédéterminé (β).

12. Procédé de communication de données selon l'une quelconque des revendications 2 à 11 et comprenant en outre l'étape qui consiste à :
libérer lesdites ressources attribuées dans chacun des autres postes de base qui n'ont pas été sélectionnés.

13. Procédé de communication de données selon l'une quelconque des revendications précédentes, dans lequel au moins l'une parmi lesdites premières ressources de communication et lesdites autres ressources de communication sont partagées entre une pluralité de postes de base.

14. Procédé de communication de données selon l'une quelconque des revendications précédentes, dans lequel lesdites ressources de communication sont des fréquences porteuses, des fenêtres temporelles ou des codes d'étalement.

15. Procédé de communication de données selon l'une quelconque des revendications précédentes, dans lequel lesdits signaux radio sont créés en accord avec un accès multiple par division par code (CDMA), lesdites premières et lesdites autres ressources de communication étant des codes d'étalement qui appartiennent à une famille de codes d'étalement partagés par lesdits postes de base.

16. Procédé de communication de données selon la revendication 15, dans lequel lesdits signaux radio sont émis dans une parmi une pluralité de fenêtres temporelles, lesdits signaux radio CDMA étant des signaux radio CDMA à division dans le temps.

17. Procédé de communication de données selon la revendication 16 qui comprend en outre l'étape qui consiste à :
émettre lesdits signaux radio par ledit poste mobile vers ledit poste de base identifié en utilisant lesdites autres ressources de communication attribuées associées audit poste de base identifié et
détecter sur ledit poste de base identifié que lesdits signaux radio sont émis en utilisant lesdites ressources de communication attribuées en accord avec un procédé de détection conjoint TD-CDMA.

18. Procédé de communication de données selon l'une quelconque des revendications précédentes, qui comprend en outre les étapes qui consistent à :
émettre des signaux radio depuis une pluralité dudit premier et de ladite pluralité d'autres postes de base vers ledit poste mobile et
combiner lesdits signaux radio pour réaliser la communication des données que représentent lesdits signaux radio.

19. Procédé de communication de données selon l'une quelconque des revendications précédentes, qui comprend en outre l'étape qui consiste à :
émettre des signaux radio par ledit autre poste de base identifié en utilisant lesdites ressources de communication attribuées en accord avec la transmission de signaux radio par ledit poste mobile vers ledit poste de base identifié en utilisant lesdites autres ressources de communication attribuées.

20. Procédé de communication de données selon l'une quelconque des revendications précédentes, qui comprend en outre les étapes qui consistent à :
à un instant prédéterminé, envoyer des signaux radio d'accès audit autre poste de base identifié,
déterminer la durée prise par lesdits signaux radio d'accès pour atteindre ledit poste de base identifié et
ajuster l'instant de transmission desdits signaux radio en fonction de ladite durée prise, de telle sorte que lesdits signaux radio arrivent audit poste de base essentiellement dans l'une desdites fenêtres temporelles attribuées.

21. Procédé de communication de données selon l'une quelconque des revendications précédentes, dans lequel lesdites pluralités de postes de base sont essentiellement synchronisées, le procédé comprenant en outre les étapes qui consistent à :
mesurer la durée prise par le signal pilote émis par chacun desdits postes de base pour atteindre ledit poste mobile,
comparer la durée ajustée de transmission desdits signaux radio audit premier poste de base à ladite durée prise mesurée et
adapter ledit instant ajusté de transmission en fonction de ladite durée prise mesurée pour lesdits autres postes de base identifiés.

22. Appareil de communications radio, qui comprend :
un poste mobile (MS) et une pluralité de postes de base (BS), chacun desdits postes mobiles et desdites pluralités de postes de base présentant un émetteur et un récepteur couplés à un contrôleur, ledit récepteur dans au moins un dudit poste mobile et/ou desdites pluralités de postes de base étant conçu pour détecter les signaux radio émis par l'émetteur des autres parmi ledit poste mobile et les postes de base, ledit contrôleur dans au moins un dudit poste mobile et desdits postes de base étant doté de moyens pour:
détecter lorsque le poste mobile est entré dans une région de transfert dans lequel la communication par lesdits signaux radio pourrait être réalisée de manière plus efficace par l'intermédiaire d'au moins un autre poste de base plutôt que par le premier poste de base en utilisant des premières ressources de communication attribuées,
attribuer d'autres ressources de communication destinées à être utilisées pour émettre des signaux radio entre ledit poste mobile et ledit au moins un autre poste de base,
**caractérisé par**
des moyens qui communiquent lesdites données à un dudit premier ou dudit au moins un autre poste de base en utilisant l'une desdites premières ressources ou desdites autres ressources de communication attribuées pendant que ledit poste mobile se trouve dans ladite zone de transfert sans interruption de la communication, pour ainsi assurer une communication essentiellement ininterrompue desdites données lorsque ledit poste mobile se déplace par rapport auxdits postes de base tout en minimisant les interférences avec d'autres communications radio.
